# EUROPEAN PATENT APPLICATION

(11) **EP 3 214 625 A1**
(43) Date of publication of application: **06.09.2017**
(21) Application number: 16460059.5
(22) Date of filing: 29.08.2016
(51) Int. Cl.: H01B 7/36, H01B 11/06, H01B 11/22, G02B 6/38, G02B 6/44

(54) **A HYBRID INFORMATION AND COMMUNICATION CABLE FOR DATA TRANSMISSION**

(30) Priority: 03.03.2016 PL 41637216
(71) Applicant: FIBRAIN Spolka z ograniczona odpowiedzialnoscia, 36-062 Zaczernie (PL)
(72) Inventor: Kalisz, Jan, 35-120 Rzeszów (PL); Kalisz, Rafal, 35-120 Rzeszów (PL); Kalisz, Bartlomiej, 93-613 Lódz (PL); Wronikowski, Marian, 35-080 Hornówek (PL); Wiechniak, Robert, 32-410 Dobczyce (PL)
(74) Representative: Warzybok, Tadeusz

(57) **Abstract**

The subject of the invention is a hybrid information and communication cable for data transmission, comprising a cross-shaped spacer (1) made of polyethylene or polypropylene, pairs of copper wires (4) in polyethylene insulation situated between and along each two adjacent arms of the spacer (1) twisted with each other, a polyester film shelling the spacer (1) together with four twisted pairs of copper wires (4), a copper earth wire situated under said shelling film, and an outer shell (8) made of a thermoplastic and adhering to the shelling film is characterised in that the cross-shaped spacer (1) along its longitudinal axis of symmetry and along the whole of its length is provided with an information carrier (3) enabling to track easily the transmission line, said information carrier (3) being made of an optical fibre waveguide.

## Description

The subject of the invention is a hybrid information and communication cable for data transmission, enabling to track its path or route on current basis and identify easily ends of the cable serving as its terminals. The cable can be used both for lying in indoor cabling systems in buildings characterised with high density of cable lines and for constructing indoor vertical and horizontal cable systems for information and communication networks.

Information and communication cables constitute dataways which transmit large amounts of digital information, using for this purpose a plurality of twisted wire pairs separated and insulated from each other, whereas the cables are installed in most cases in cable groups laid directly on vertical and horizontal cable trays or in cable troughs.

The information and communication cables for data transmission known in the prior art, including those for indoor applications, comprise cross-shaped spacers made of plastics, typically of polyethylene (PE) or polypropylene (PP), whereas one pair of copper wires coated with polyethylene insulation and twisted around each other is placed along and between each pair of adjacent rectangular cross-sectioned spacer arms perpendicular to each other. The four pairs of insulated copper wires constituting the data transmission medium arranged this way between four equal arms of the cross-shaped spacer are wrapped together in a screening film, forming thus their round sleeve-shaped shell, under which, next to one of the four twisted wire pairs, the earth wire is provided, and all of the elements are enveloped by an outer sheath adhering to said shell, the sheath being made of a thermoplastic, usually of LSOH type, not containing chlorine compounds and low-smoking in fire conditions.

In other known information and communication cables, the cross-shaped spacers used in them have four arms with T-shaped cross-sections or with a triangular profile.

Known are also information and communication cables for data transmission comprising cross-shaped spacers made of polyethylene (PE), whereas four twisted pairs of copper wires in polyethylene (PE) insulation and one earth wire are placed along and between pairs of two adjacent perpendicular arms of the spacers. These four pairs of conductors together with their spacers and the earth conductor are wrapped in a aluminium-coated PET-type film and an outer jacket made of a thermoplastic of PVC type. Ends of these cables are led out typically in distribution frame cabinets, at panels, on trays or in sockets, and identification of individual cables in a group of cables in the process of connecting them to terminals strips gives rise to serious difficulties. This results in significant lengthening of the process of connecting the cables and increased risk or mistakes made in the connections, which in turn gives rise to difficulties in current operation, maintenance, and troubleshooting. End portions of such cables need to be permanently labelled, and absence of identification label on a given cable end results in necessity to track the line (route) of the cable again and look for the second end of the right cable.

A cable with separately screened twisted pairs known from description of patent US 5952615 uses a central bar-shaped filling enveloped by a screen and certain overall screen to separate completely each of the twisted-pair wires. Such configuration requires usually that the screening elements are earthed. Moreover, one of example embodiments of the quoted invention provides for two metal strips placed inside ribs of the central bar-shaped filler in the form of a cross. Such combination of two metal strips is an undesirable feature as it allows the electromagnetic crosstalk at the point of connection of the two walls, and moreover, proximity of the screen has a deteriorating effect on stability of electrical parameters, such as impedance and attenuation, including the reflection loss.

The objective of the present invention is to provide an improved structure of information and communication cable for data transmission eliminating the above-mentioned flaws and inconveniences of cable types known and used in the prior art and to enable easy, reliable, and fast identification of the cable along the whole of its length, including both cable ends, by using for this purpose a focused light from a LED source of any colour, preferably white or red, at the near end of the cable to be identified.

According to the invention, the essential feature of the hybrid information and communication cable for data transmission enabling to track its route in systems with high density of cable lines, comprising a cross-shaped spacer made of polyethylene or polypropylene, pairs of copper wires in polyethylene insulation situated between and along each two adjacent arms of the spacer twisted with each other, a polyester film shelling the spacer together with four twisted pairs of copper wires and a copper earth wire situated under said shelling film, and an outer sheath made of a thermoplastic and adhering to said shelling film consists in that the cross-shaped spacer along its longitudinal axis of symmetry and along the whole of its length is provided with an information carrier made of an optical fibre waveguide enabling to track easily the transmission line. It is favourable when the information carrier enabling to track easily the transmission line is a multi-mode or a single-mode optical waveguide fibre. Moreover, the optical waveguide fibre functioning as an information carrier enabling to track easily the transmission line of the cable is a poly(methyl methacrylate) (PMMA) or quartz fibre waveguide, with diameter falling preferably into the range 0.15-0.80 mm.

Equipping the cross-shaped spacer with an optical waveguide element transmitting light signals made of poly(methyl methacrylate) or quartz glass fibre with appropriate diameter situated in the longitudinal axis of symmetry of the spacer, allowing to introduce easily on its near end the originally focused light from a source in the form of light emitting diodes (LEDs) in suitable colours, preferably white or red with appropriate portion of UV radiation, allows to ensure its visibility also at the second end of the cable, and thus to identify the cable readily. Further, using an optical waveguide fibre with diameter of its core as large as possible allows to introduce on its near end the largest possible amount of light, with the minimum of its attenuation constant falling into the range of the visible light spectrum wavelengths 380-780 nm, including red light with wavelengths above 700 nm, allowing to identify the fibre at its other remote illuminated end.

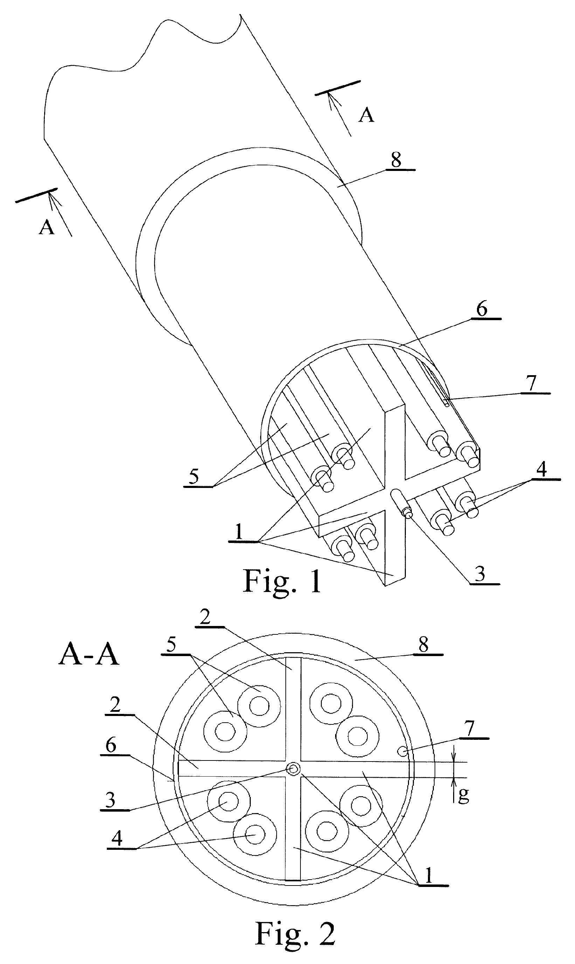

The subject of the invention in its example embodiment is shown in drawings, of which Fig. 1 shows the information and communication cable for data transmission with some of its components removed for better visibility and clarity of the figure in the perspective view, and Fig 2 - the same cable in cross-section along line A-A.

### Example 1

The hybrid information and communication cable for data transmission comprises a centrally situated cross-shaped spacer 1 made of polyethylene (PE) with low density (LDPE), where thickness "g" of perpendicular arms 2 of the spacer is 1.05 mm, provided in its longitudinal axis of symmetry with an information carrier 3 enabling to track easily the cable route, which is a multi-mode optical fibre waveguide, with protective layer (jacket) 62.5/125/250, in an acrylic secondary sheath with total diameter of 0.25 mm, adhering loosely to the material of the cross-shaped spacer 1. Between and along each two adjacent arms 2 of the spacer there are twisted pairs of type single-wire copper conductors 4 of AWG23 type in polyethylene insulation 5, and the whole structure is wrapped in a polyester screening film 6, forming thus a sleeve with round profile, under which an earth wire 7 is placed made of galvanised copper wire with diameter of 0.4 mm, whereas to the screening film, a sleeve-shaped outer sheath 8 adheres made of a low-smoke zero-halogen (LSOH) type material.

### Example 2

The hybrid information and communication cable for data transmission according to the second version of its embodiment has structure identical to this described in the first example of its embodiment, and the difference between them consist in that in the second version of its embodiment, the cross-shaped spacer was made of polypropylene (PP), and as the information carrier enabling to track easily the cable line, a single-mode optical waveguide fibre was used, whereas its sleeve-shaped shell 8 was made of high-density polyethylene (HDPE) with specific weight of 0.955 g/cm³.

### Example 3

The hybrid information and communication cable for data transmission according to the third version of its embodiment has structure identical to this described in the first example of its embodiment, and the difference between them consist in that in the third version of its embodiment, the cross-shaped spacer 1 was made of high-density polyethylene (HDPE) with specific weight of 0.955 g/cm³, and the optical waveguide mounted in its longitudinal symmetry axis was made of quartz waveguide fibre, whereas its sleeve-shaped outer shell 8 was made of a low-smoke zero-halogen (LSOH) type material.

### Example 4

The hybrid information and communication cable for data transmission according to the fourth version of its embodiment has structure identical to this described in the first example of its embodiment, and the difference between them consist in that in the fourth versions of its embodiment, the cross-shaped spacer 1 was made of high-density polyethylene (HDPE) with specific weight of 0.955 g/cm³, and the optical fibre (optical waveguide) situated on its longitudinal symmetry axis was made of HPCE 200/230-type poly(methyl methacrylate) (PMMA) with outer diameter of 0.23 mm, whereas its sleeve-shaped outer shell 8 was made of a low-smoke zero-halogen (LSOH) type material.

Tests and experiments carried out with all four versions of embodiment of the information and communication cable according to the invention have proved that the type of material from which the optical fibre waveguide 3 is made as a medium enabling to track easily the route of the cable and the size of diameter of its light-transmitting core have a decisive effect on intensity of illumination of the remote rear end of this cable and easiness to introduce light at its near end. It has been found that the larger was the diameter of core of the used optical waveguide fibre 3, the lower was attenuation of non-collimated visible light and the further (at the larger distance) the feature of possibility to track easily the route of the cable could maintained, and thus the light signal at the remote cable end was stronger, enabling to track easily its route.

In all example versions of embodiment of the easy-to-track information and communication cable, the cross-shaped spacer 1 equipped with a multi-mode optical waveguide fibre 3 was fabricated either by means of separate extruding, in the course of which, a ready-made optical waveguide fibre was being inserted centrally into plasticised material of the spacer, or with the use of the method of simultaneous co-extrusion, consisting in extruding at the same time the centrally positioned optical waveguide of poly(methyl methacrylate) (PMMA) within the framework of a single process.

## Claims

1. A hybrid information and communication cable for data transmission enabling to track its route in systems with high density of cable lines, comprising a cross-shaped spacer made of polyethylene or polypropylene, pairs of copper wires in polyethylene insulation situated between and along each two adjacent arms of the spacer and twisted in pairs with each other, a polyester film shelling the spacer together with four twisted pairs of copper wires, a copper earth wire situated under said shelling film, and an outer shell made of a thermoplastic **characterised in that** the cross-shaped spacer (1) along its longitudinal axis of symmetry and along the whole of its length is provided with an information carrier (3) enabling to track easily the transmission line, said carrier being made of an optical fibre waveguide.

2. The cable according to claim 1 **characterised in that** the information carrier (3) enabling to track easily the transmission line is a multi-mode optical waveguide fibre.

3. The cable according to claim 1 **characterised in that** the information carrier (3) enabling to track easily the transmission line is a single-mode optical waveguide fibre.

4. The cable according to any of claims 1-3 **characterised in that** that the optical waveguide acting as a means of information carrier (3) enabling to track easily the transmission line is made of poly(methyl methacrylate) (PMMA) fibre.

5. The cable according to any of claims 1-3 **characterised in that** that the optical waveguide acting as a means of information carrier (3) enabling to track easily the transmission line of the cable is made of quartz fibre.

6. The cable according to any of claims 1-5 **characterised in that** that the optical fibre waveguide acting as a means of information carrier (3) enabling to track easily the cable line has preferably a diameter of 0.15-0.80 mm.
